# FASCICULE DE BREVET EUROPEEN

(11) **EP 1 771 718 B1**
(45) Date de publication et mention de la délivrance du brevet: **02.09.2020**
(21) Numéro de dépôt: 05788740.8
(22) Date de dépôt: 06.07.2005
(51) Int. Cl.: G01N 15/10, G01N 15/14

(54) **PROCEDE DE CARACTERISATION DES COMPOSANTS CELLULAIRES D'UN LIQUIDE BIOLOGIQUE**
VERFAHREN ZUR CHARAKTERISIERUNG VON ZELLKOMPONENTEN EINER BIOLOGISCHEN FLÜSSIGKEIT
METHOD FOR CHARACTERIZING CELLULAR COMPONENTS OF A BIOLOGICAL FLUID

(30) Priorité: 30.07.2004 FR 0408431
(43) Date de publication de la demande: 11.04.2007
(73) Titulaire: HORIBA ABX SAS, 34090 Montpellier (FR)
(72) Inventeur: LEFEVRE, Didier, 34980 St Clement de Rivière (FR)
(74) Mandataire: Plaçais, Jean Yves
(86) Numéro de dépôt international: PCT/FR2005/001740
(87) Numéro de publication internationale: WO 2006/024716

(56) Documents cités:
- FR-A- 2 821 428
- US-A- 5 882 933
- US-B1- 6 228 652
- US-B1- 6 287 791
- SHAPIRO H M ET AL: "COMBINED BLOOD CELL COUNTING AND CLASSIFICATION WITH FLUOROCHROME STAINS AND FLOW INSTRUMENTATION" JOURNAL OF HISTOCHEMISTRY AND CYTOCHEMISTRY, HISTOCHEMICAL SOCIETY, NEW YORK, NY, US, vol. 24, no. 1, janvier 1976 (1976-01), pages 396-411, XP002058391 ISSN: 0022-1554
- STEINKAMP J A ET AL: "IMPROVED MULTILASER/MULTIPARAMETER FLOW CYTOMETER FOR ANALYSIS AND SORTING OF CELLS AND PARTICLES", REVIEW OF SCIENTIFIC INSTRUMENTS, AIP, MELVILLE, NY, US, vol. 62, no. 11, 1 November 1991 (1991-11-01), pages 2751-2764, XP000271069, ISSN: 0034-6748, DOI: 10.1063/1.1142210

## Description

L'invention concerne un procédé de caractérisation des composants cellulaires d'un liquide biologique et la quantification de cellules de population et de sous-population dans le liquide biologique.

Dans le cadre de l'invention, la locution "liquide biologique" désigne tout liquide naturel ou préparation biologique contenant des composants cellulaires ou susceptibles d'en contenir, tel que le sang, la moelle osseuse, le liquide céphalo-rachidien, le liquide pleural, et la locution "composant cellulaire" signifie tout aussi bien une cellule dans son sens le plus classique, tels les globules rouges et les globules blancs, que tout autre type cellulaire présent dans un liquide biologique, tel que les plaquettes. Egalement, la locution "population" signifie un ensemble de cellules de la même classe, par exemple, les basophiles, les lymphocytes, etc., et la locution "sous-population" signifie un sous-ensemble de cellules spécifiques de même type, telles que les lymphocytes B, T4, T8, etc. de la population lymphocytaire, mais aussi les formes immatures ou altérées.

La détermination et le comptage de l'ensemble de population cellulaire dans différents liquides biologiques, tels que le sang, revêtent une importance capitale en terme de diagnostic clinique. Les méthodes traditionnelles d'analyses cytologiques d'un liquide biologique utilisent différents appareillages classiques, tels que les automates d'hématologie basés sur la cytométrie de flux, destinés à la différenciation et au comptage automatique précis de l'ensemble des cellules présentes dans un échantillon de liquide biologique qu'il est ensuite possible de classifier en populations. Ces appareillages comportent habituellement des dispositifs de mesure, typiquement électriques, et/ou optiques, compatibles avec la présence éventuelle de divers réactifs et colorants, aboutissant à des résultats d'analyse tels que définis ci-dessus. Ainsi pour un échantillon de sang, ces automates permettent l'établissement d'un hémogramme fournissant des paramètres classiques de la numération globulaire, de la formule leucocytaire, et du comptage des plaquettes. A l'aide d'appareillages supplémentaires distincts les uns des autres, il est possible d'obtenir des résultats complémentaires sur l'identification des réticulocytes, des érythroblastes, des cellules immatures, etc., afin de compléter l'ensemble des données de l'hémogramme. A titre d'exemple, on peut citer la demande de brevet FR0102489 déposée par la demanderesse qui concerne un procédé et un réactif destinés à l'identification et au comptage de cellules biologiques par des méthodes de mesure multi-paramétriques mettant en œuvre la cytométrie de flux.

On peut ainsi en déduire des informations pour chacune des catégories de cellules biologiques, aboutissant à leur classification.

Dans la grande majorité des cas, le comptage automatique précis de l'ensemble des composants cellulaires et la différenciation de chacune des populations de composants cellulaires sont suffisants pour renseigner le praticien sur l'existence d'un déséquilibre ou d'un désordre cytologique. Cependant, lors de l'analyse d'un liquide biologique par un automate d'analyse cytologique conventionnel, certains résultats anormaux de comptage cellulaire, par rapport à ceux normalement attendus, peuvent justifier une investigation supplémentaire pour affiner l'un ou plusieurs de ces résultats. En outre, une telle analyse ne permet pas de quantifier précisément les différentes populations de cellules au sein d'une même population ou famille, ce qui représente un inconvénient très gênant, notamment pour détecter certaines pathologies chez les patients ou en suivre l'évolution.

Une analyse complémentaire s'avère donc indispensable pour aboutir à des résultats plus précis de la numération d'une sous-population cellulaire choisie, par exemple leucocytaire, dans un échantillon sanguin. L'apparition de certaines pathologies (réactions immunitaires ou leucémie), pouvant être corrélées à un taux anormal d'une population cellulaire de type leucocytaire.

De telles analyses complémentaires, indépendantes de celles effectuées par un automate conventionnel, peuvent consister à réaliser manuellement un frottis suivi d'une observation sous microscope. L'identification et le comptage de composants cellulaires sont, dans ce cas, couramment utilisés en complément ou en remplacement de ceux obtenus par l'automate.

Elles peuvent également consister en un marquage cellulaire spécifique par des anticorps sélectionnés, comprenant éventuellement des fluorochromes, pour la discrimination d'une population cellulaire choisie marquée, ou par toute autre méthode de marquage connue dans l'art antérieur. A titre d'exemple, on peut citer la demande de brevet EP0552707 qui divulgue le marquage à l'aide, par exemple, d'anticorps monoclonaux anti-CD45 et anti-CD71, pour la différenciation de l'ensemble des cellules leucocytaires dans un cytomètre de flux. La demande de brevet WO00/16103 décrit la quantification des cellules éosinophiles et basophiles par leur discrimination effectuée par l'intermédiaire d'anticorps ou un kit d'anticorps et leur détection par fluorométrie. Egalement, le marquage d'une population lymphocytaire par des anticorps anti-CD19, anti-CD4 et anti-CD8, permet de séparer respectivement les sous-populations des lymphocytes B, des lymphocytes T Helper et T Suppressor.

Bien que ces analyses permettent de contrôler et/ou corriger les résultats obtenus par un automate conventionnel, elles introduisent souvent une imprécision et n'autorisent qu'une relation statistique avec les résultats obtenus par l'automate. La mise en œuvre de méthodes plus performantes telles que la cytométrie de flux conduit sensiblement aux mêmes résultats, la relation directe avec les résultats obtenus par l'automate n'étant pas possible puisque deux analyses séparées sont effectuées, ce qui réduit la précision de l'ensemble des résultats.

En effet, lorsqu'une analyse des composants cellulaires d'une aliquote de liquide biologique révèle une anomalie du comptage précis des composants cellulaires, l'utilisateur procède à une deuxième analyse indépendante sur une aliquote différente du même liquide biologique en utilisant deux systèmes d'analyse indépendants, effectuant donc des mesures sur des bases séparées, c'est à dire que chacune des mesures fournit des résultats différents, ce qui nécessite donc une corrélation mathématique des résultats obtenus par chacune des mesures pour aboutir au final à des résultats entachés d'erreurs. Ceci conduit à une interprétation des résultats qui revêt un caractère subjectif car ne permettant pas une identification fiable de la cause réelle des résultats anormaux, qui peuvent être dus soit à l'échantillon lui-même, soit à l'appareillage et qui peuvent encore se révéler inacceptables pour un diagnostic précis d'une pathologie, le cas échéant.

La présente invention vise à pallier les inconvénients de l'art antérieur.

Elle propose à cet effet un procédé de différenciation et de comptage des composants cellulaires présents dans un échantillon d'un liquide biologique, selon la revendication 1.

Ainsi, le procédé de l'invention comprend une première étape d'analyse cytologique conventionnelle d'un liquide biologique ou aliquote de liquide biologique, classiquement mise en œuvre par un cytomètre de flux, comportant des moyens de mesure de type électrique et/ou optique et des réactifs représentant un agent de lyse cellulaire, un colorant du matériel intracellulaire, un diluant aqueux et leur mélange connu de l'homme du métier. Les signaux provenant des moyens de mesure ci-dessus sont classiquement traités et convertis en une "série normalisée de résultats", c'est-à-dire un ensemble de résultats intégrant les paramètres classiques de l'analyse. Ceci permet donc l'identification des composants cellulaires et leur comptage précis, ceux-ci étant ensuite classifiés en différentes populations, comme décrit par exemple dans la demande de brevet FR9701090.

La deuxième étape, ou étape complémentaire, permet d'obtenir des résultats complémentaires permettant d'identifier la particularité cellulaire.

Le résultat d'un comptage anormal sur une catégorie particulière de composant cellulaire ou sur un nombre de populations permet l'identification d'une ou de plusieurs anomalies. Dans le procédé de l'invention, ces anomalies peuvent être liées, par exemple à un nombre anormalement élevée de blastes ou à des lymphocytes de structure anormale.

Selon l'invention, on met d'abord en œuvre l'étape primaire seule et, dans le cas où les résultats primaires permettent l'identification d'au moins une anomalie liée à une particularité cellulaire identifiée, on met ensuite en œuvre simultanément l'étape primaire, qui est réitérée pour obtenir à nouveau l'ensemble des résultats primaires, et l'étape complémentaire pour obtenir les résultats complémentaires liés à cette particularité cellulaire.

Avantageusement, le procédé comprend en outre une étape de marquage cellulaire spécifique, fonction de la particularité cellulaire identifiée, suivie d'une étape d'analyse cytologique permettant d'obtenir l'ensemble des résultats primaires pour l'identification de l'ensemble des populations contenues dans l'échantillon ainsi que les résultats complémentaires pour l'identification de la (des) population(s) ou sous-population(s) concernant la particularité cellulaire identifiée.

Ces particularités engendrent ainsi une étape de marquage spécifique d'un type particulier des composants cellulaires, tels qu'une sous-population des lymphocytes dans le sang, dont le nombre dans l'aliquote sanguine est anormal par rapport à celui habituellement attendu, ce qui justifie une investigation plus poussée de différenciation et comptage de cette population particulière afin de tenter d'en déterminer les différentes sous-populations.

Le marquage des composants cellulaires étant ainsi effectué, il est alors nécessaire de révéler les composants cellulaires spécifiquement marqués ou, le cas échéant, ceux non marqués. Ceci est réalisé par la mise en œuvre d'une étape complémentaire de mesure cytologique conduisant à des résultats supplémentaires de quantification et de différenciation des populations cellulaires ou des composants cellulaires de sous-populations qui ont été à la source de la ou des anomalies liées à leur nombre ou à leur présence. Comme déjà indiqué, il est procédé à une analyse réitérée des analyses primaires associées et simultanées à l'étape complémentaire des composants cellulaires marqués. Les résultats de ces mesures complémentaires associés avec ceux réitérés de l'étape primaire d'analyse obtenue pour une même aliquote de liquide biologique fournissent donc pour la sous-population visée des résultats de différenciation et de comptage établis sur une base de référence identique à celle permettant d'établir la série normalisée de résultats. Toute erreur ou imprécision inhérente à des analyses successives, à des méthodes d'analyse différente, à des appareillages non intégrés, s'en trouve ainsi supprimée.

Ainsi, il sera possible de mesurer sur le même composant cellulaire différentes caractéristiques physico-chimiques, notamment par l'utilisation d'un marqueur choisi pour son affinité spécifique à au moins une caractéristique physico-chimique, telle que le matériel intracellulaire (ADN, ARN), les protéines ou les enzymes particulières, la structure membranaire, etc... Ceci permet la différenciation de chaque composant cellulaire marqué par rapport à un composant cellulaire non marqué. Les composants cellulaires ainsi marqués ou non marqués sont ensuite détectés par des méthodes connues (voir ci-après). Egalement, le marquage cellulaire permet de quantifier de façon extrêmement précise les différentes sous-populations des composants cellulaires telles les lymphocytes B, T4, T8, etc. de la population lymphocytaire.

Par conséquent, la mise en œuvre du procédé de l'invention permet la caractérisation de particularités liées à la présence de certains composants cellulaires caractéristiques de certaines pathologies ou à leur nombre anormalement faible ou élevé dans un même échantillon de liquide biologique. Il permet aussi des investigations intracellulaires dans une population ou sous-population déterminée. Le procédé selon l'invention permet d'offrir ses possibilités avec des résultats d'une précision et d'une fiabilité jusqu'à présent jamais atteintes, puisque les analyses complémentaires qui correspondent à ces possibilités sont réalisées simultanément et conjointement avec les analyses conduisant à la série normalisée des résultats, assurant ainsi l'existence d'une base de référence commune à l'ensemble des résultats complémentaires et série normalisée, et éliminant ainsi notamment tous les inconvénients des analyses séparées.

Le procédé selon l'invention permet aussi l'élimination de la plus grande partie des erreurs d'interprétation des déviations observées sur la série normalisée des résultats, celle-ci pouvant faire l'objet en tant qu'anomalie d'un traitement systématique et standardisé.

Le procédé de l'invention conduit, en une seule mise en œuvre, à des résultats complets et globaux, ce qui évite le recours à des analyses successives, multiples et séparées, qui pourraient être prescrites par un praticien pour l'établissement d'un diagnostic précis en terme de pathologie. Ceci a pour avantage une diminution des coûts associés à ces analyses.

De même, dans le cas de pathologies identifiées pour le suivi de l'évolution ou de l'efficacité d'un traitement, le praticien dispose d'un plus grand choix de prescription des analyses à effectuer avec la garantie de fiabilité d'un ensemble de résultats rapportés à une base de référence unique.

Enfin, le procédé selon l'invention apporte au praticien, une fiabilité accrue dans la détection et la caractérisation des particularités cellulaires de la série normalisée des résultats.

L'étape primaire d'analyse cytologique comprend avantageusement la mise en œuvre de premiers moyens de mesure permettant de différencier l'ensemble des composants cellulaires présents dans l'échantillon par au moins un moyen de différenciation électrique incluant l'impédance ou un moyen de différenciation optique incluant la diffraction, la diffusion, la transmission et la fluorescence.

En outre, cette étape primaire peut comprendre la mise en œuvre d'un ou plusieurs réactifs permettant la différenciation de l'ensemble des composants cellulaires présents dans l'échantillon.

L'étape complémentaire d'analyse cytologique comprend avantageusement la mise en œuvre de moyens de mesure secondaires permettant une différenciation et un comptage d'au moins une population ou sous-population cellulaire présente dans l'échantillon de liquide biologique.

Les moyens de mesure secondaires comprennent de préférence la mise en œuvre d'au moins un moyen de différenciation optique. Ainsi, ces moyens de mesure secondaires comportant de préférence une ou plusieurs voies de mesure fonctionnant en optique et capables de mesurer de manière unitaire ou associée des paramètres optiques choisis parmi la diffraction, la transmission, la fluorescence ou l'absorbance, notamment à certaines longueurs d'onde ou plages de longueurs d'onde.

Les moyens de mesure secondaires peuvent être constitués d'au moins une voie de mesure fonctionnant en fluorescence et utilisant une ou plusieurs longueurs d'onde judicieusement choisies. En particulier, les moyens de mesure secondaires peuvent être opérationnels dans des longueurs d'onde choisies allant de l'ultraviolet à l'infrarouge.

De manière préférentielle, l'étape de marquage cellulaire spécifique comprend la mise en œuvre d'au moins un marqueur permettant de différencier la particularité cellulaire, tandis que l'étape complémentaire d'analyse cytologique comprend la mise en œuvre de moyens de mesure secondaires comprenant au moins une voie de mesure capable d'identifier le ou les marqueur(s) simultanément à l'ensemble des mesures.

Le traitement des signaux de mesure peut être effectué par un calculateur comportant des moyens appropriés de traitement des données et de restitution des résultats. Ces moyens peuvent représenter deux logiciels de calcul, dont l'un sera destiné au traitement des signaux pour restituer une visualisation graphique des résultats et l'autre aux traitements des signaux issus de l'analyse des résultats. Le calculateur peut-être associé à des moyens de commande pilotant l'étape de marquage cellulaire spécifique.

Pour la mise en œuvre de l'étape de marquage, on peut utiliser au moins un marqueur cellulaire représentant une sonde moléculaire choisie dans le groupe constitué par au moins un colorant, au moins un anticorps conjugué à un colorant ou fluorochrome.

Le colorant choisi comme marqueur est obligatoirement différent du colorant du matériel intracellulaire des mesures prédéfinies, c'est-à-dire qu'il doit pouvoir être mis en évidence par des techniques de mesure optique à des longueurs d'ondes différentes de celles nécessaires à la détection du colorant des mesures prédéfinies.

Le marquage par au moins un anticorps ou un mélange d'anticorps ou kit d'anticorps, classiquement mis en œuvre par des réactions antigènes/anticorps, est effectué en utilisant de préférence des anticorps monoclonaux sur lesquels sont avantageusement greffés des colorants ou des fluorochromes conventionnels, tels que la fluorescéine ou la phycoérythrine cyanine 5 (PC5).

En outre, pour l'étape d'analyse, les moyens de mesure de type électrique et optique représentent respectivement des moyens de mesure d'impédance cellulaire en courant continu ou alternatif et des moyens de mesure choisis dans le groupe constitué par la diffraction lumineuse, la diffusion lumineuse, la transmission lumineuse ou la fluorescence.

Dans le cadre de l'invention, le liquide biologique représente de préférence du sang total dilué ou non, du sérum, de la moelle osseuse diluée ou non, du liquide céphalo-rachidien, de l'urine, du liquide synovial, du liquide pleural, etc.

Lorsque l'échantillon de liquide biologique est un échantillon sanguin, l'étape primaire d'analyse cytologique comprend avantageusement des mesures nécessaires à la réalisation d'un hémogramme incluant tout ou partie des paramètres de la numération cellulaire, de la formule leucocytaire et de la numération des plaquettes.

En ce cas, l'étape de marquage peut-être effectuée par l'utilisation d'anticorps spécifiques de marquage des composants cellulaires d'un échantillon sanguin choisi parmi les populations de globules rouges, de leucocytes et de plaquettes. Ainsi, il est possible de mettre en œuvre le procédé de l'invention par un marquage ciblé sur les globules rouges, conjointement à celui ciblé sur des globules blancs ou des plaquettes, sans risque d'interaction mutuelle et d'interférence dans les analyses.

L'étape de marquage est avantageusement effectuée par l'utilisation d'anticorps spécifiques de marquage cellulaire d'au moins une sous-population spécifique présente dans une population cellulaire de l'échantillon sanguin.

De préférence, l'étape de marquage est effectuée par l'utilisation d'anticorps spécifiques de marquage d'au moins une sous-population choisie dans le groupe constitué par les lymphocytes, les neutrophiles, les basophiles, les éosinophiles, les monocytes, les globules rouges, les plaquettes, et tous leurs précurseurs.

L'étape de marquage cellulaire peut être effectuée par au moins un anticorps ou un mélange d'anticorps conjugués au fluorochrome, l'étape complémentaire d'analyse cytologique utilisant des moyens de mesure par fluorescence cellulaire de type fluorescence orthogonale (FL2).

L'étape de marquage cellulaire est avantageusement effectuée par au moins un anticorps choisi parmi le CD3, le CD4, le CD8, le CD9, le CD10, le CD11b, le CD13, le CD14, le CD15, le CD16, le CD18, le CD19, le CD20, le CD21, le CD22, le CD33, le CD34, le CD45, le CD63, le CD64, le CD71, le CD203, le CRTH2, le FMC7 et le HLA-DR.

L'étape de marquage cellulaire peut aussi utiliser au moins un marqueur cellulaire représentant une sonde moléculaire choisie dans le groupe constitué par au moins un colorant, au moins un anticorps conjugué à un colorant ou fluorochrome.

Selon une autre caractéristique de l'invention, l'étape primaire d'analyse cytologique et l'étape complémentaire d'analyse cytologique mesurent simultanément des caractéristiques physiques différentes des mêmes composants cellulaires en un même flux.

Le procédé selon l'invention peut comprendre des étapes de mélange du réactif et du marqueur cellulaire avec le liquide biologique et de transfert du mélange ainsi obtenu dans une cuve d'analyse, ce qui permet une analyse globale et simultanée sur le même liquide biologique ou aliquote de liquide biologique, comme explicité ci-avant.

Le procédé de l'invention permet d'établir pour un échantillon de sang par exemple, un hémogramme complet, c'est-à-dire une identification détaillée allant au-delà de la série normalisée de résultats et comportant la différenciation et le comptage des populations cellulaires du sang, à savoir les lymphocytes, les monocytes, les érythrocytes, les granulocytes, les neutrophiles, les éosinophiles et basophiles, les érythroblastes, les cellules granuleuses immatures, les plaquettes, et d'autres blastes, conjointement à la possibilité de mettre en évidence et de compter, le cas échéant, une sous-population de blastes anormale dans une population lymphocytaire, ne présentant pas une distribution lymphocytaire conforme à celle attendue. Ces lymphoblastes sont isolés des autres populations lymphocytaires selon leur non positivité à l'anticorps anti-CD45, par exemple.

Sous un autre aspect, il est décrit un dispositif pour la mise en œuvre du procédé ci-dessus, comprenant un équipement fonctionnant en cytométrie de flux ayant des premiers moyens de mesure comportant au moins un canal de mesure capable de mesurer des paramètres choisis parmi des paramètres optiques dans le groupe constitué par la diffraction, la diffusion, la transmission et la fluorescence et parmi un paramètre électrique incluant l'impédance; des moyens d'analyse secondaire comportant au moins un canal de mesure capable de mesurer des paramètres optiques choisis parmi la diffraction, la transmission, la fluorescence et l'absorbance; et un calculateur pour traiter les résultats issus des premiers moyens de mesure et des moyens de mesure secondaires.

Dans une forme de réalisation préférée, les premiers moyens de mesure comprennent un capteur de diffraction dans l'axe (FSC), un capteur de diffusion orthogonale (SSC), un capteur de fluorescence orthogonale (FL1) et une électrode de mesure de résistivité, tandis que les moyens de mesure secondaires comprennent un capteur de mesure de fluorescence orthogonale (FL2) .

L'équipement comprend donc des premiers moyens d'analyse conventionnels pré-définis intégrés dans un cytomètre de flux. Avantageusement, ceux-ci représentent au moins un paramètre de mesure ou canal choisi dans le groupe constitué par la diffraction dans l'axe (FSC), la diffusion orthogonale (SSC), la fluorescence orthogonale (FL1) et la résistivité (RES) d'un échantillon ou aliquote de liquide biologique tels que décrits par la demanderesse dans la demande de brevet EP0425381. Ces premiers moyens d'analyse conduisent donc à la différenciation des composants cellulaires et à leur comptage précis permettant leur classification en populations.

Avantageusement, les moyens primaires sont agencés pour incorporer au moins un réactif de différenciation et de comptage de l'ensemble des composants cellulaires du liquide biologique choisi dans le groupe constitué par un agent de lyse cellulaire, un colorant du matériel intracellulaire, un diluant aqueux et leur mélange, tels que décrits par la demanderesse dans la demande de brevet FR0102489.

La lyse de certains composants cellulaires du liquide biologique, en particulier de cellules érythrocytaires, est mise en œuvre par exemple par un détergent ionique et/ou non ionique pouvant représenter les amines primaires, les cholamides, etc. Le choix de l'agent de lyse est fonction de la nature du liquide biologique et sera ainsi aisément déterminé par l'homme du métier.

Le colorant des composants cellulaires est destiné à s'associer à l'ADN, ou l'ARN intracellulaire. Il peut représenter classiquement le thiazole orange, le thiazole bleu, etc. Le réactif peut éventuellement comprendre un agent de fixation des composants cellulaires, connu de l'homme du métier.

Selon une forme de réalisation, l'équipement comprend en outre :
- des moyens d'identification d'au moins une particularité cellulaire correspondant à la présence, au nombre de certaine(s) population(s) cellulaire(s) ou de certains composants cellulaires,
- des moyens de marquage cellulaire spécifique fonction de la particularité identifiée.

Les moyens de marquage comportent de préférence au moins un marqueur cellulaire représentant une sonde moléculaire choisie dans le groupe constitué par au moins un colorant, au moins un anticorps conjugué à un colorant ou fluorochrome et, de façon plus préférée, ils représentent au moins un anticorps, ou mélange d'anticorps, greffé d'un fluorochrome.

Selon une forme de réalisation de l'équipement les moyens de mesure adaptés aux moyens de marquage représentant un ou plusieurs canaux de mesure, sont respectivement des moyens de mesure d'impédance cellulaire en courant continu ou alternatif et au moins un moyen de mesure choisi dans le groupe constitué par la diffraction, la transmission lumineuse et par la fluorescence ou l'absorbance des cellules marquées à des longueurs d'onde allant de l'ultraviolet à l'infrarouge.

De préférence, les moyens de mesure par fluorescence cellulaire représentent la fluorescence orthogonale du fluoro-chrome (FL2) greffé à un anticorps spécifique.

Selon une forme préférée du dispositif, il comprend un calculateur agencé pour réaliser une corrélation des résultats issus des premiers moyens de mesure et des moyens de mesure secondaires et une mise en forme graphique des résultats issus des premiers moyens de mesure et des moyens de mesure secondaires.

Avantageusement, le calculateur est agencé pour réaliser une interprétation et une classification des composants cellulaires par leurs familles ou par leurs caractéristiques physiques.

Le calculateur est agencé pour le traitement des signaux de mesure et il comporte en outre des moyens appropriés de traitement des données et de restitution des résultats, tels que décrits ci-dessus. Il comporte de préférence des mémoires de stockage des résultats obtenus par les diverses analyses.

Il est envisageable qu'un tel équipement présente des capacités décisionnelles de façon automatique, quant à l'opportunité de mettre en œuvre des analyses, supplémentaires à celles de routine, nécessaires à l'identification et au comptage des éléments recherchés ou soupçonnés responsables des anomalies décelées.

Les caractéristiques et les avantages de l'invention ressortiront mieux de la description détaillée qui va suivre et de l'exemple non limitatif de réalisation dans lesquels il est fait référence aux dessins annexés suivants, qui représentent :
- figure 1, un diagramme des éléments spécifiques constitutifs de l'équipement d'analyse selon une forme préférée de réalisation ;
- figures 2 à 19, les diagrammes de répartition cellulaire ou matrices bi-dimensionnelles, obtenues au moyen de mesure multi-paramétriques FSC, RES, SSC, FL1 et FL2.

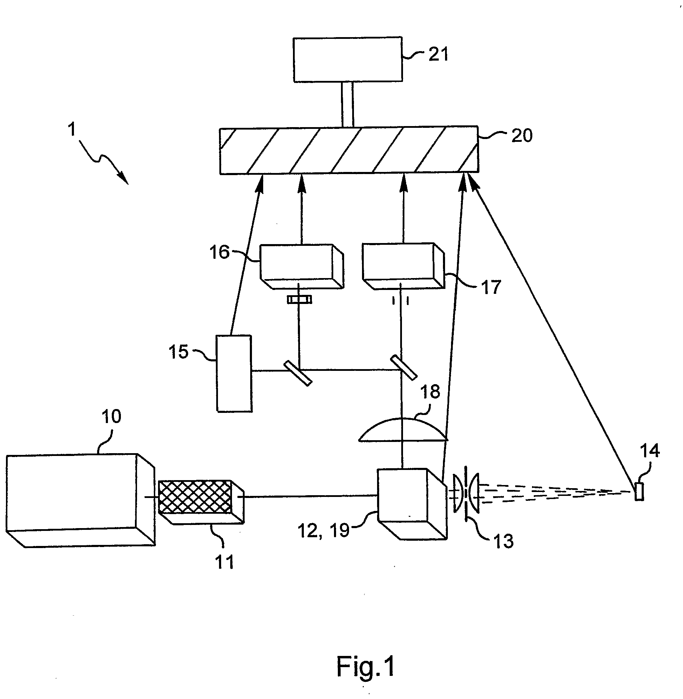

A la figure 1 sont représentés sous la forme d'un diagramme fonctionnel les éléments spécifiques constitutifs d'un équipement 1 d'analyse d'une aliquote de liquide biologique selon l'invention. Ce diagramme reprend en partie les paramètres décrits dans la demande de brevet FR0102489. L'équipement 1, un automate basé sur la cytométrie de flux, présente des paramètres et les éléments suivants :
- un laser monochromatique 10,
- un dispositif 11 de mise en forme du faisceau lumineux,
- une cuve à circulation 12 de mesure des volumes cellulaires par résistivité et par mesure optique,
- un système optique 13 de collection du rayonnement de diffraction dans l'axe (FSC),
- un capteur 14 de diffraction dans l'axe (FSC) donnant une interprétation de la taille,
- un capteur 15 de diffusion orthogonale (SSC) exprimant la structure des cellules observées,
- un capteur 16 de fluorescence orthogonale (FL1) mesurant l'expression de l'ARN et de l'ADN intracellulaires,
- un capteur 17 de fluorescence orthogonale (FL2) mesurant la réactivité d'un anticorps greffé d'un fluorochrome,
- un système optique 18 de collection du rayonnement orthogonal,
- un électrode de mesure 19 de résistivité (RES) incorporé dans la cuve 12,
- un calculateur 20,
- un système 21 de visualisation des résultats.

L'analyse d'une aliquote de liquide biologique est mise en œuvre sur l'équipement 1 comportant les canaux de mesure optique par diffraction dans l'axe, diffusion orthogonale et fluorescence orthogonale cellulaire, dont les principes sont brièvement exposés ci-dessous.

Dans le premier cas, une cellule de l'échantillon biologique, placée dans la cuve 12 de mesure, traversée par un rayonnement lumineux émis par la source 10 et mis en forme par le dispositif 11, engendre une diffraction du rayonnement incident dont l'intensité est fonction de la taille cellulaire. Un système optique 13 de collection du rayonnement de diffraction est placé dans l'alignement du rayonnement. Le rayonnement diffracté est collecté sur le capteur 14 dont la réponse est fonction de la diffraction cellulaire.

Le principe de la diffusion orthogonale repose sur la mesure de la diffusion du rayonnement lumineux traversant les composants cellulaires. Le rayonnement est collecté sur le capteur 15 orthogonalement au rayonnement diffusé en sortie de la cuve 12 et la réponse est proportionnelle à la diffusion.

Les mesures de fluorescence orthogonale FL1 et FL2 sont basées respectivement sur le principe d'excitation d'une cellule colorée à une longueur d'onde spécifique émettant un rayonnement de fluorescence de longueur d'onde différente de celle d'excitation et l'excitation du fluorochrome greffé sur un anticorps spécifique émettant à son tour un rayonnement de fluorescence spécifique.

Un système optique 18 de collection du rayonnement orthogonal FL1 et FL2 est placé orthogonalement au rayonnement émis par la source de rayonnement 10.

L'équipement 1 comprend également un canal de mesure électrique par résistivité (RES). Cette mesure repose sur le principe de passage d'un élément dans la cuve 12, dans un champ électrique où le courant est constant et la résistance qu'oppose cet élément dans le champ provoque un accroissement de la tension nécessaire pour maintenir constant le courant, selon la loi d'Ohm.

Les électrodes 19, intégrées dans la cuve 12, mesurent la résistivité de l'élément qui permet d'évaluer son volume.

### Exemple 1

Une aliquote de sang normal est analysée sur un automate conventionnel d'analyse basé sur la cytométrie de flux, tel que décrit dans la demande de brevet FR 0102489, pour la caractérisation et la quantification des éléments leucocytaires.

Les résultats de cette analyse sont observés sous la forme de matrice bi-dimensionnelle représentant différentes combinaisons de résultats de mesure obtenus pour chaque canal de mesure. Par souci de clarté, les points dans chaque matrice représentant chaque élément cellulaire, ont été omis. Seuls les contours délimitant chacune des populations obtenues ont été tracés.

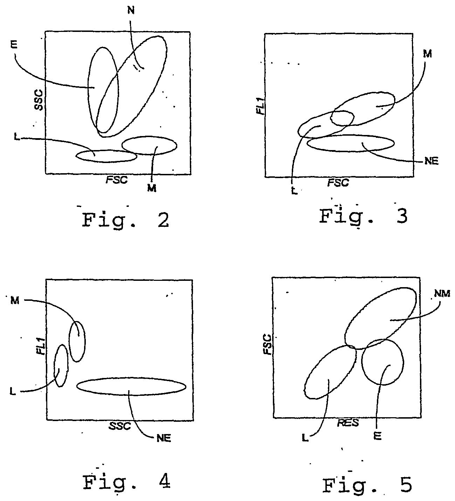

La figure 2 représente une matrice obtenue au moyen des deux canaux FSC et SSC. On observe quatre populations : L représentant les lymphocytes, M les monocytes, E les oésinophiles, N les neutrophiles. Dans cette figure 1, les populations N et E ne sont pas nettement séparées.

La figure 3 représente la matrice obtenue au moyen des deux canaux FSC et FL1. Les populations N et E sont confondues et on note un chevauchement entre les populations L et M.

La figure 4 représente une matrice formée par les canaux de mesure SSC et FL1. Les populations N et E sont confondues et les populations L et M sont totalement séparées l'une de l'autre.

La figure 5 représente également une matrice formée au moyen des deux canaux RES et FSC. Selon cette disposition, les populations L et E sont séparées mais pas les populations N et M.

### Exemple 2

Une aliquote de sang est analysée sur un automate conventionnel d'analyse basé sur la cytométrie de flux utilisant les canaux de mesure décrits dans la demande de brevet FR 0102489, pour la caractérisation et la quantification des composants leucocytaires.

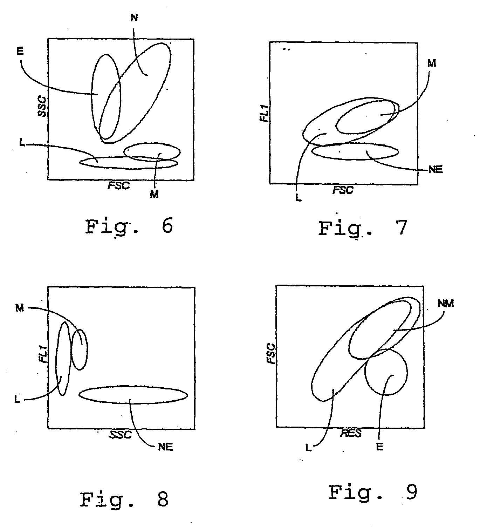

La figure 6 représente une matrice obtenue au moyen des deux canaux FSC et SSC. Si les populations L et N ont un profil similaire à celui de la figure 2, en revanche, la population L est anormalement étendue par rapport à celle normale visualisée à la figure 2. Ceci est également observable aux figures 7 à 9 correspondant respectivement aux représentations matricielles des figures 3 à 5. A l'issue de ces analyses, il s'avère probable que la population lymphocytaire, dont la distribution sur le diagramme est plus étendue que celle d'une population lymphocytaire normale, présente des éléments cellulaires anormaux tels que blastiques.

### Exemple 3

Une aliquote de sang de l'exemple 2 est analysée selon le procédé de l'invention utilisant l'équipement 1.

Cette analyse est effectuée comme suit :
On prélève une aliquote de 50 µl d'un échantillon de sang humain que l'on mélange avec 50 µl d'une solution d'anticorps monoclonaux anti-CD45 comprenant comme fluorochrome la PC5. La solution ainsi obtenue est soumise à une incubation de quelques minutes, de l'ordre de 3 à 30 minutes, en l'absence de tout rayonnement lumineux et à température ambiante. La solution ainsi obtenue est ensuite mélangée à des réactifs comprenant comme colorant intracellulaire, le thiazole orange, pour la lyse des globules rouges et la fixation des éléments cellulaires nécessaire pour la mise en œuvre des étapes primaires d'analyse.

Dans ce cas, la longueur d'onde d'excitation du thiazole orange par le laser 10 est de 488 nm et celle de l'émission à 530 nm. L'anticorps anti-CD45 est utilisé dans cet exemple pour marquer spécifiquement les leucocytes matures et normaux, selon un ordre décroissant d'expression, les lymphocytes, les éosinophiles, les monocytes, les basophiles et les neutrophiles.

La solution est ensuite transférée dans la cuve à circulation 12 de l'équipement 1 pour analyse. L'utilisateur déclenche les analyses de l'aliquote selon les quatre canaux fournissant des résultats classiques de différenciation et de comptage des différentes populations cellulaires, et selon le cinquième canal FL2 (longueur d'onde d'excitation du PC5 est de 488 nm et celle de l'émission est de 660 nm), par l'intermédiaire de l'ordinateur 20 effectuant celle-ci simultanément. Le logiciel procède au traitement des résultats issus de chaque mesure au moyen des canaux définis ci-dessus.

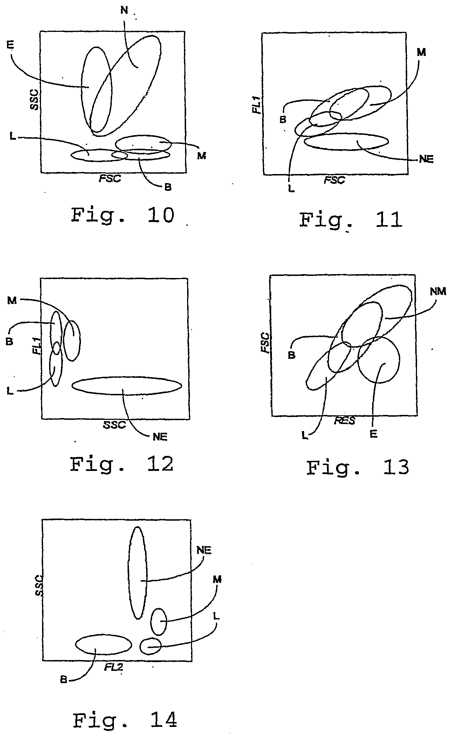

La figure 10 représente une matrice obtenue au moyen des deux canaux FSC et SSC. On observe cinq populations : L représentant les lymphocytes, M les monocytes, E les éosinophiles et B blastes qui sont négatifs aux anticorps anti-CD45.

Dans cette figure 10, les populations N et E ne sont pas nettement séparées et on observe un chevauchement entre les populations L, M et B.

La figure 11 représente la matrice obtenue au moyen des deux canaux FSC et FL1. Les populations N et E sont confondues et on note un chevauchement entre les populations L, M et B.

La figure 12 représente une matrice formée par les canaux de mesure SSC et FL1. Les populations N et E sont également confondues et bien que la population M soit séparée des autres, on observe que les populations B et L ne sont pas entièrement disjointes.

La figure 13 représente également une matrice formée au moyen des deux canaux RES et FSC. Selon cette disposition, aucune des populations présentes n'est nettement séparée.

La figure 14 représente une matrice formée au moyen des deux canaux FL2 et SSC. Cette représentation matricielle autorise la séparation de la population de blastes B anormaux de la population lymphocytaire.

La mise en œuvre du procédé utilisant l'équipement 1 de l'invention a permis de caractériser et de quantifier la présence de blastes B (négatifs à l'anti-CD45) dans l'aliquote de sang analysée. La mesure complémentaire représentée en figure 14 permet une différenciation nette des blastes B, ce que ne permettait pas l'ensemble des mesures pré-définies de l'hémogramme.

### Exemple 4

Cet exemple est destiné à établir un comptage précis des composants cellulaires non blastique d'un échantillon de sang, dont la population en blastes est connue dans le cadre d'un suivi de traitement chez un patient. Des analyses préalables ont mis en évidence une distribution anormale de la population lymphocytaire justifiant un contrôle complémentaire.

L'analyse qui suit est destinée à l'identification des éléments lymphocytaires pour leur comptage précis.

Cette identification va être réalisée au moyen d'anticorps anti-CD19 et anti-CD3 conjugués au même fluorochrome PC5 et par la détection des lymphocytes marqués par le canal FL2. Une aliquote de 50 µl de sang à population blastique connue, est analysée sur l'équipement 1 décrit plus haut et reprend les étapes d'analyse et les réactifs décrits à l'exemple 3.

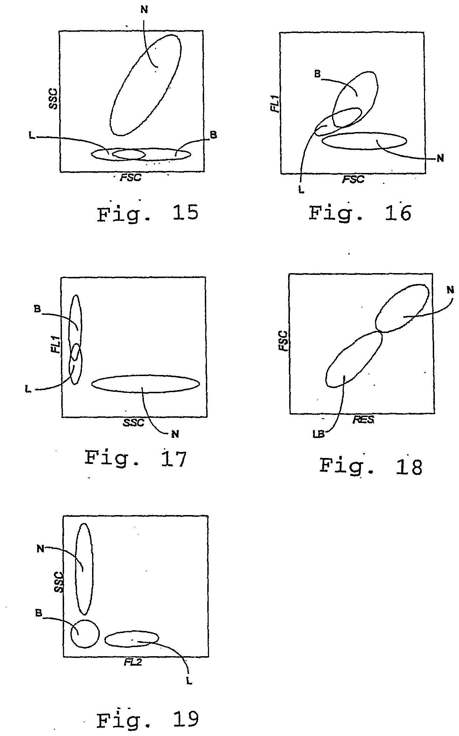

La figure 15 représente une matrice obtenue au moyen des deux canaux FSC et SSC. On observe trois populations : L pour les lymphocytes positifs au marquage par les anti-CD3 et les anti-CD19, N pour les neutrophiles et B pour les éléments lymphocytaires négatifs à ces deux anticorps. La population N ne se distingue totalement des deux autres, L et B pour lesquelles on note un chevauchement inter populations. Ceci est également observable aux figures 16 à 18 correspondant respectivement aux représentations matricielles selon les dispositions des figures 3 à 5.

La figure 19 représente une matrice formée au moyen des deux canaux FL2 et SSC. Cette représentation matricielle autorise la séparation des trois populations considérées et notamment la séparation des lymphocytes positifs de ceux négatifs aux anti-CD3 et anti-CD19 sur l'ensemble de la formule leucocytaire, ce qui permet leur comptage précis. La mesure complémentaire représentée en figure 19 permet une différenciation nette des lymphocytes positifs aux anticorps CD3 et aux anticorps CD19, ce que ne permet pas l'ensemble des mesures prédéfinies de l'hémogramme.

## Revendications

1. Procédé de différenciation et de comptage des composants cellulaires présents dans un échantillon d'un liquide biologique, **caractérisé en ce qu'**il comprend :
- une étape primaire seule d'analyse cytologique classiquement mise en œuvre par cytométrie de flux pour obtenir un ensemble de résultats primaires permettant une différenciation et un comptage de l'ensemble des composants cellulaires de l'échantillon en différentes populations ;
- l'identification d'au moins une anomalie liée à une particularité cellulaire identifiée au moyen des résultats primaires ;
- la mise en œuvre simultanée de l'étape primaire, qui est réitérée pour obtenir à nouveau l'ensemble des résultats primaires, et d'une étape complémentaire d'analyse cytologique d'un type particulier de composants cellulaires, fonction d'une particularité cellulaire identifiée, pour obtenir des résultats complémentaires permettant une différenciation et un comptage d'au moins une population ou sous-population cellulaire de l'échantillon pour l'identification de cette particularité cellulaire, laquelle étape complémentaire d'analyse cytologique comprend la mise en œuvre de moyens de mesure secondaires permettant une différenciation et un comptage d'au moins une population ou sous-population cellulaire présente dans l'échantillon de liquide biologique ; et
**en ce que** l'étape primaire d'analyse cytologique et l'étape complémentaire d'analyse cytologique mesurent simultanément des caractéristiques physiques différentes des mêmes composants cellulaires en un même flux.

2. Procédé selon la revendication 1, **caractérisé en ce qu'**il comprend en outre une étape de marquage cellulaire spécifique, fonction de la particularité cellulaire identifiée, suivie d'une étape d'analyse cytologique permettant d'obtenir l'ensemble des résultats primaires pour l'identification de l'ensemble des populations contenues dans l'échantillon ainsi que les résultats complémentaires pour l'identification de la (des) population(s) ou sous-population(s) concernant la particularité cellulaire identifiée.

3. Procédé selon la revendication 1 ou 2, **caractérisé en ce que** l'étape primaire d'analyse cytologique comprend la mise en œuvre de premiers moyens de mesure permettant de différencier l'ensemble des composants cellulaires présents dans l'échantillon par au moins un moyen de différenciation électrique incluant l'impédance ou un moyen de différenciation optique incluant la diffraction, la diffusion, la transmission et la fluorescence.

4. Procédé selon la revendication 3, **caractérisé en ce que** l'étape primaire d'analyse cytologique comprend la mise en œuvre d'un ou plusieurs réactifs permettant la différenciation de l'ensemble des composants cellulaires présents dans l'échantillon.

5. Procédé selon l'une des revendications 1 à 4, **caractérisé en ce que** les moyens de mesure secondaires comprennent la mise en œuvre d'au moins un moyen de différenciation optique.

6. Procédé selon la revendication 5, **caractérisé en ce que** les moyens de mesure secondaires comportant une ou plusieurs voies de mesure fonctionnant en optique et capables de mesurer de manière unitaire ou associée des paramètres optiques choisis parmi la diffraction, la transmission, la fluorescence ou l'absorbance, notamment à certaines longueurs d'onde ou plages de longueurs d'onde.

7. Procédé selon la revendication 6, **caractérisé en ce que** les moyens de mesure secondaires sont constitués d'au moins une voie de mesure fonctionnant en fluorescence et utilisant une ou plusieurs longueurs d'ondes judicieusement choisies.

8. Procédé selon la revendication 7, **caractérisé en ce que** les moyens de mesure secondaires fonctionnant en fluorescence sont opérationnels dans des longueurs d'onde choisies allant de l'ultraviolet à l'infrarouge.

9. Procédé selon la revendication 2, **caractérisé en ce que** l'étape de marquage cellulaire spécifique comprend la mise en œuvre d'au moins un marqueur permettant de différencier la particularité cellulaire, et **en ce que** l'étape complémentaire d'analyse cytologique comprend la mise en œuvre de moyens de mesure secondaires comprenant au moins une voie de mesure capable d'identifier le ou les marqueur(s) simultanément à l'ensemble des mesures.

10. Procédé selon l'une des revendications 1 à 9, **caractérisé en ce que** l'échantillon de liquide biologique est choisi parmi
- du sang total ou non, dilué ou non,
- du sérum,
- de la moelle osseuse, diluée ou non,
- du liquide céphalo-rachidien,
- de l'urine,
- du liquide synovial,
- du liquide pleural.

11. Procédé selon l'une des revendications 1 à 10, **caractérisé en ce que** l'échantillon de liquide biologique est un échantillon sanguin et **en ce que** l'étape primaire d'analyse cytologique comprend des mesures nécessaires à la réalisation d'un hémogramme incluant tout ou partie des paramètres de la numération cellulaire, de la formule leucocytaire et de la numération des plaquettes.

12. Procédé selon l'une des revendications 2 à 11, **caractérisé en ce que** l'échantillon de liquide biologique est un échantillon sanguin et **en ce que** l'étape de marquage cellulaire comprend l'utilisation d'anticorps spécifiques de marquage des composant cellulaires de l'échantillon sanguin, ces anticorps étant choisis parmi les populations de globules rouges, de leucocytes et de plaquettes.

13. Procédé selon la revendication 12, **caractérisé en ce que** l'étape de marquage cellulaire comprend l'utilisation d'anticorps spécifiques de marquage cellulaire d'au moins une sous-population spécifique présente dans une population cellulaire de l'échantillon sanguin.

14. Procédé selon l'une des revendications 12 et 13, **caractérisé en ce que** l'étape de marquage cellulaire comprend l'utilisation d'anticorps spécifiques de marquage d'au moins une sous-population choisie dans le groupe constitué par les lymphocytes, les neutrophiles, les basophiles, les éosinophiles, les monocytes, les globules rouges, les plaquettes, et tous leurs précurseurs.

15. Procédé selon l'une des revendications 2 à 14, **caractérisé en ce que** l'étape de marquage cellulaire est effectuée par au moins un anticorps ou un mélange d'anticorps conjugués au fluorochrome et **en ce que** l'étape complémentaire d'analyse cytologique utilise des moyens de mesure par fluorescence cellulaire de type fluorescence orthogonale (FL2).

16. Procédé selon l'une des revendications 2 à 15, **caractérisé en ce que** l'étape de marquage cellulaire est effectuée par au moins anticorps choisi parmi le CD3, le CD4, le CD8, le CD9, le CD10, le CD11b, le CD13, le CD14, le CD15, le CD16, le CD18, le CD19, le CD20, le CD21, le CD22, le CD33, le CD34, le CD45, le CD63, le CD64, le CD71, le CD203, le CRTH2, le FMC7 et le HLA-DR.

17. Procédé selon l'une des revendications 2 à 15, **caractérisé en ce que** l'étape de marquage cellulaire utilise au moins un marqueur cellulaire représentant une sonde moléculaire choisie dans le groupe constitué par au moins un colorant, au moins un anticorps conjugué à un colorant ou fluorochrome.

## Patentansprüche

1. Verfahren zur Differenzierung und Zählung der Zellkomponenten, die in einer Probe einer biologischen Flüssigkeit vorhanden sind, dadurch gekenneichnet, dass es Folgendes umfasst:
- einen einzigen Primärschritt der zytologischen Analyse, die klassischerweise per Durchflusszytometrie umgesetzt wird, um eine Einheit von Primärergebnissen zu erhalten, die eine Differenzierung und Zählung der Einheit der Zellkomponenten der Probe in unterschiedliche Populationen ermöglichen;
- Identifizieren mindestens einer Anomalie in Verbindung mit einer anhand der Primärergebnisse identifizierten zellularen Besonderheit;
- gleichzeitiges Umsetzen des Primärschrittes, der wiederholt wird, um erneut die Einheit der Primärergebnisse zu erhalten, und eines ergänzenden Schrittes der zytologischen Analyse eines besonderen Typs von Zellkomponenten in Abhängigkeit von einer identifizierten zellularen Besonderheit, um ergänzende Ergebnisse zu erhalten, die eine Differenzierung und eine Zählung mindestens einer Zellpopulation oder Unterpopulation der Probe zum Identifizieren dieser zellularen Besonderheit zu ermöglichen, wobei der ergänzende Schritt der zytologischen Analyse das Umsetzen von Sekundärmessmitteln umfasst, die eine Differenzierung und eine Zählung mindestens einer Zellpopulation oder Unterpopulation der Probe der biologischen Flüssigkeit ermöglichen; und
dadurch, dass der Primärschritt der zytologischen Analyse und der ergänzende Schritt der zytologischen Analyse gleichzeitig die verschiedenen physikalischen Merkmale derselben Zellkomponenten in einem gleichen Durchfluss messen.

2. Verfahren nach Anspruch 1, **dadurch gekennzeichnet, dass** es weiter einen Schritt der spezifischen zellularen Markierung in Abhängigkeit von der identifizierten zellularen Besonderheit, gefolgt von einem Schritt der zytologischen Analyse umfasst, der es ermöglicht, die Einheit der Primärergebnisse zum Identifizieren der Einheit der Populationen umfasst, die in der Probe enthalten sind, sowie der ergänzenden Ergebnisse zum Identifizieren der Population(en) oder Unterpopulation(en) hinsichtlich der identifizierten zellularen Besonderheit.

3. Verfahren nach Anspruch 1 oder 2, **dadurch gekennzeichnet, dass** der Primärschritt der zytologischen Analyse das Umsetzen erster Messmittel umfasst, die es ermöglichen, die Einheit der Zellkomponeten, die in der Probe vorhanden sind, anhand einer elektrischen Differenzierung, die die Impedanz beinhaltet oder einer optischen Differenzierung zu differenzieren, die Beugung, Verbreitung, Übertragung und Fluoreszenz beinhaltet.

4. Verfahren nach Anspruch 3, **dadurch gekennzeichnet, dass** der Primärschritt der zytologischen Analyse das Umsetzen eines oder mehrerer Reagenzen umfasst, die die Differenzierung der Einheit der in der Probe vorhandenen Zellkomponenten ermöglicht.

5. Verfahren nach einem der Ansprüche 1 bis 4, **dadurch gekennzeichnet, dass** die Sekundärmessmittel das Umsetzen mindestens eines optischen Differenzierungsmittel umfassen.

6. Verfahren nach Anspruch 5, **dadurch gekennzeichnet, dass** die Sekundärmessmittel, die einen oder mehrere Messpfade beinhalten, die optisch funktionieren, und imstande sind, in einheitlicher oder verknüpfter Weise optische Parameter zu messen, die aus der Beugung, Übertragung, Fluoreszenz oder Absorption, insbesondere mit bestimmten Wellenlängen oder Wellenlängenbereichen ausgewählt werden.

7. Verfahren nach Anspruch 6, **dadurch gekennzeichnet, dass** die Sekundärmessmittel aus mindestens einem Messpfad gebildet werden, der mit Fluoreszenz funktioniert, und eine oder mehrere sinnvoll ausgewählte Wellenlängen verwendet.

8. Verfahren nach Anspruch 7, **dadurch gekennzeichnet, dass** die Sekundärmessmittel, die mit Fluoreszenz funktionieren, in den ausgewählten Wellenlängen betreibbar sind, die von Ultraviolett bis Infrarot reichen.

9. Verfahren nach Anspruch 2, **dadurch gekennzeichnet, dass** der Schritt der spezifischen zellularen Markierung das Umsetzen mindestens eines Markers umfasst, der es ermöglicht, die zellulare Besonderheit zu differenzieren, und dadurch, dass der ergänzende Schritt der zytologischen Analyse das Umsetzen von Sekundärmessmitteln umfasst, die mindestens einen Messpfad umfassen, der imstande ist, den oder die Marker gleichzeitig mit allen Messungen zu identifizieren.

10. Verfahren nach einem der Ansprüche 1 bis 9, **dadurch gekennzeichnet, dass** die Probe einer biologischen Flüssigkeit ausgewählt wird aus
- Vollblut oder nicht, verdünnt oder nicht,
- Serum,
- Knochenmark, verdünnt oder nicht,
- Zerebrospinalflüssigkeit,
- Urin,
- Synovialflüssigkeit,
- Pleuralflüssigkeit.

11. Verfahren nach einem der Ansprüche 1 bis 10, **dadurch gekennzeichnet, dass** die Probe der biologischen Flüssigkeit eine Blutprobe ist und dadurch, dass der Primärschritt der zytologischen Analyse Messungen umfasst, die zur Erstellung eines Blutbildes nötig sind, inklusive aller oder eines Teils der Parameter der Zellenzahl, der Leukozytenformel, und der Thrombozytenzahl.

12. Verfahren nach einem der Ansprüche 2 bis 11, **dadurch gekennzeichnet, dass** die Probe der biologischen Flüssigkeit eine Blutprobe ist, und dadurch, dass der Zellmarkierungsschritt die Verwendung von spezifischen Markierungsantikörpern der Zellkomponenten der Blutprobe umfasst, wobei diese Antikörper aus den Populationen roter Blutkörperchen, Leukozyten und Thrombozyten ausgewählt werden.

13. Verfahren nach Anspruch 12, **dadurch gekennzeichnet, dass** der Zellmarkierungsschritt die Verwendung spezifischer Antikörper zur Zellmarkierung mindestens einer spezifischen Unterpopulation umfasst, die in einer Zellpopulation der Blutprobe vorhanden ist.

14. Verfahren nach einem der Ansprüche 12 und 13, **dadurch gekennzeichnet, dass** der Zellmarkierungsschritt die Verwendung spezifischer Antikörper zur Markierung mindestens einer Unterpopulation umfasst, die aus der Gruppe ausgewählt wird, die aus Lymphozyten, Neutrophilen, Basophilen, Eosinophilen, Monoztyen, roten Blutkörperchen, Thrombozyten, und allen ihren Vorläufern besteht.

15. Verfahren nach einem der Ansprüche 2 bis 14, **dadurch gekennzeichnet, dass** der Zellmarkierungsschritt durch mindestens einen Antikörper oder einem Gemisch an mit Fluorochrom konjugierten Antikörpern durchgeführt wird, und dadurch, dass der ergänzende Schritt der zytologischen Analyse Messmittel durch Zellfluoreszenz in der Art einer orthogonalen Fluoreszenz (FL2) verwendet.

16. Verfahren nach einem der Ansprüche 2 bis 15, **dadurch gekennzeichnet, dass** der Zellmarkierungsschritt durch mindestens einen Antikörper durchgeführt wird, der aus CD3, CD4, CD8, CD9, CD10, CD11b, CD13, CD14, CD15, CD16, CD18, CD19, CD20, CD21, CD22, CD33, CD34, CD45, CD63, CD64, CD71, CD203, CRTH2, FMC7 und HLA-DR ausgewählt wird.

17. Verfahren nach einem der Ansprüche 2 bis 15, **dadurch gekennzeichnet, dass** der Zellmarkierungsschritt mindestens einen Zellmarker verwendet, der eine Molekularsonde repräsentiert, die aus der Gruppe ausgewählt wird, die durch mindestens einen Farbstoff, mindestens einen mit einem Farbstoff oder Fluorochrom konjugierten Antikörper besteht.

## Claims

1. Method of differentiating and counting the cellular components present in a sample of a biological fluid, **characterised in that** it comprises:
- a primary step of cytological analysis, carried out on its own, conventionally carried out by flow cytometry to obtain a set of primary results enabling all the cellular components of the sample to be differentiated and counted in different populations;
- identifying at least one anomaly linked to an identified cellular peculiarity based on the primary results;
- simultaneously carrying out the primary step, which is reiterated so as to obtain the set of primary results once more, and a complementary step of cytological analysis of a particular type of cellular components, based on an identified cellular peculiarity, to obtain complementary results enabling at least one cell population or subpopulation of the sample to be differentiated and counted in order to identify said cellular peculiarity, which complementary step of cytological analysis comprises using secondary measuring means enabling at least one cell population or subpopulation present in the sample of biological fluid to be differentiated and counted; and
**in that** the primary step and the complementary step of cytological analysis simultaneously measure different physical characteristics of the same cellular components in the same flow.

2. Method according to claim 1, **characterised in that** it further comprises a step of specific cell labelling, based on the identified cellular peculiarity, followed by a step of cytological analysis which makes it possible to obtain primary results for identifying all the populations contained in the sample as well as the complementary results for identifying the population(s) or subpopulation(s) relating to the identified cellular peculiarity.

3. Method according to one of claims 1 or 2, **characterised in that** the primary step of cytological analysis comprises using first measuring means enabling all the cellular components present in the sample to be differentiated by at least one means of electrical differentiation including impedance or a means of optical differentiation including diffraction, diffusion, transmission and fluorescence.

4. Method according to claim 3, **characterised in that** the primary step of cytological analysis comprises using one or more reagents enabling all the cellular components present in the sample to be differentiated.

5. Method according to one of claims 1 to 4, **characterised in that** the secondary measuring means comprise the use of at least one means of optical differentiation.

6. Method according to claim 5, **characterised in that** the secondary measuring means comprising one or more means of measurement operating optically and capable of measuring, in unitary or combined manner, optical parameters selected from among diffraction, transmission, fluorescence or absorbance, notably at certain wavelengths or wavelength ranges.

7. Method according to claim 6, **characterised in that** the secondary measuring means are made up of at least one means of measurement operating by fluorescence and using one or more judiciously chosen wavelengths.

8. Method according to claim 7, **characterised in that** the secondary measuring means operating by fluorescence operate at selected wavelengths ranging from ultraviolet to infrared.

9. Method according to claim 2, **characterised in that** the step of specific cell labelling comprises the use of at least one marker which enables the cellular peculiarity to be differentiated, and **in that** the complementary step of cytological analysis comprises using secondary measuring means comprising at least one method of measurement capable of identifying the marker(s) simultaneously with the set of measurements.

10. Method according to one of claims 1 to 9, **characterised in that** the sample of biological fluid is selected from among:
- whole or non-whole blood, diluted or undiluted,
- serum,
- bone marrow, diluted or undiluted,
- cerebrospinal fluid,
- urine,
- synovial fluid,
- pleural fluid.

11. Method according to one of claims 1 to 10, **characterised in that** the sample of biological fluid is a blood sample and **in that** the primary step of cytological analysis comprises measurements needed to produce a haemogram including all or some of the parameters of cell count, leukocyte formula and platelet count.

12. Method according to one of claims 2 to 11, **characterised in that** the sample of biological fluid is a blood sample and **in that** the step of cell labelling comprises using specific antibodies for labelling the cellular components of the blood sample, these antibodies being selected from among the populations of red corpuscles, leukocytes and platelets.

13. Method according to claim 12, **characterised in that** the step of cell labelling comprises the use of specific antibodies for the cell labelling of at least one specific subpopulation present in a cell population of the blood sample.

14. Method according to one of claims 12 and 13, **characterised in that** the step of cell labelling comprises the use of specific antibodies for labelling at least one subpopulation selected from among the lymphocytes, neutrophils, basophils, eosinophils, monocytes, red corpuscles, platelets, and all their precursors.

15. Method according to one of claims 2 to 14, **characterised in that** the step of cell labelling is carried out with at least one antibody or a mixture of antibodies conjugated with the fluorochrome, and **in that** the complementary step of cytological analysis uses means of measurement by cellular fluorescence of the orthogonal fluorescence type (FL2).

16. Method according to one of claims 2 to 15, **characterised in that** the step of cell labelling is carried out with at least one antibody selected from among CD3, CD4, CD8, CD9, CD10, CD11b, CD13, CD14, CD15, CD16, CD18, CD19, CD20, CD21, CD22, CD33, CD34, CD45, CD63, CD64, CD71, CD203, CRTH2, FMC7 and HLA-DR.

17. Method according to one of claims 2 to 15, **characterised in that** the step of cell labelling uses at least one cell marker representing a molecular probe selected from among the group comprising at least one dye, at least one antibody conjugated with a dye or fluorochrome.
